# EUROPÄISCHE PATENTSCHRIFT

(11) **EP 1 179 534 B1**
(45) Veröffentlichungstag und Bekanntmachung des Hinweises auf die Patenterteilung: **11.09.2002**
(21) Anmeldenummer: 01112039.1
(22) Anmeldetag: 23.05.2001
(51) Int. Cl.: C07F 7/12, C01B 33/08

(54) **Verfahren zum Aufarbeiten von Rückständen der Direktsynthese von Organochlorsilanen**
Process for treatment of residue resulting from direct process for preparing organosilanes
Méthode pour le retraitement du résidu obtenu par le procédé direct pour la synthèse d'organosilanes

(30) Priorität: 10.08.2000 DE 10039172
(43) Veröffentlichungstag der Anmeldung: 13.02.2002
(73) Patentinhaber: Wacker-Chemie GmbH, 81737 München (DE)
(72) Erfinder: Mautner, Konrad, Dr., 01612 Nünchritz (DE); Köhler, Bernd, 01612 Leckwitz (DE); Tamme, Gudrun, 01468 Boxdorf (DE)
(74) Vertreter: Fritz, Helmut, Dr.

(56) Entgegenhaltungen:
- US-A- 2 681 355
- US-A- 5 877 337

## Beschreibung

Die Erfindung betrifft ein Verfahren zur Herstellung von Alkylchlorsilanen aus den flüssigen Bestandteilen der Rückstände der Direktsynthese von Alkylchlorsilanen.

Bei der Direktsynthese von Alkylchlorsilanen der allgemeinen Formel RₐH_{b}SiCl_{4-a-b} mit a = 1 - 4 und b = 0, 1 oder 2 aus Siliciummetall und Alkylchloriden R-Cl, wobei R = Methyl besonders bevorzugt ist, entstehen als Nebenprodukte Oligosilane, Carbosilane, Siloxane und hochsiedende Crackprodukte. Darüber hinaus finden sich im Destillationsrückstand Feststoffe aus der Direktsynthese, die als Feinstanteil auch durch Cyclone und Filter nicht zurückgehalten werden. Die Feststoffe bestehen aus Silicium, Metallchloriden, z. B. AlCl₃, Metallsiliciden und Ruß.

Den überwiegenden Teil dieser Rückstände machen die Oligosilane, besonders die Disilane R_{c}Cl_{6-c}Si₂, mit c = 0 - 6, aus. Deshalb wurden früh Verfahren entwickelt, die Disilane in Monosilane überzuführen. Das gelingt z. B. durch aminkatalysierte Spaltung mit Chlorwasserstoff. Spaltbar sind allerdings nur Disilane mit weniger als 4 Methylgruppen. Darüber hinaus müssen die Disilane vorher von den festen Rückständen abgetrennt werden, da diese Rückstände, wie beispielsweise Aluminiumchlorid, als Katalysatorgifte wirken.

Um auch die sogenannten nichtspaltbaren Disilane zu verwerten wurden Verfahren entwickelt, in denen nichtspaltbare Disilane in spaltbare Disilane überführt und dann gespalten werden, z.B. beschrieben in US 4,393,229, oder in denen diese Disilane direkt an speziellen, meist edelmetallhaltigen Katalysatoren mit HCl gespalten werden, z. B. beschrieben in US 5,502,230. Nachteilig an metallkatalysierten Umsetzungen ist immer die Vergiftungsneigung der Katalysatoren durch Verunreinigungen aus dem Rückstand.

In US 2,681,355, ist ein Verfahren beschrieben, bei dem unkatalysiert und rein thermisch, höher siedende Rückstände der Direktsynthese von Methylchlorsilanen im Autoklav oder im Leerrohr mit Chlorwasserstoff bei Temperaturen von 400 - 900°C in monomere Silane umgewandelt werden. Die Patentschrift hebt als großen Vorteil bei dem Einsatz eines Rohrreaktors die geringe Verkokungsneigung hervor, durch die der Prozeß über eine längere Zeit betreibbar sei. Allerdings gilt das nicht wenn Rückstände behandelt werden, die durch ihren Feststoffgehalt schnell zum Zuwachsen von Reaktionsrohren führen.

In US 5,877,337 ist ein Verfahren beschrieben, das auch feststoffhaltige Rückstände der Direktsynthese von Organochlorsilanen bei geringen Drücken aufarbeiten und die siliciumorganischen Anteile in verwertbare Silane umwandeln kann. Das Ziel wird erreicht, durch die thermische Spaltung der Rückstände der Direktsynthese mit Chlorwasserstoff in einem Rohrreaktor mit drehenden Einbauten bei Temperaturen von 300-800 °C. Durch die Drehbewegungen der Einbauten werden Anbackungen durch Verkokung oder aus den Feststoffanteilen an den Reaktorwänden abgeschert. Ein Zuwachsen des Reaktors wird dadurch verhindert. Dieses Verfahren stellt allerdings höchste Anforderungen an die technische Realisierung und ist deshalb auch entsprechend kostenintensiv.

In US 5,292,912 ist ein Verfahren beschrieben zur Spaltung des hoch siedenden Rückstands der Direktsynthese mit HCl und Katalysatoren wie Aktivkohle, Aluminiumchlorid auf Träger und Platin- oder Palladiumverbindungen auf Träger. Als Träger werden Aluminiumoxid, Silica, Zeolithe oder Aktivkohle beschrieben. Das Verfahren kann ausgeführt werden als Festbettverfahren oder in der Wirbelschicht.

Die Herstellung von Trichlorsilan- und Tetrachlorsilangemischen aus Silicium und Chlorwasserstoff in der Wirbelschicht ist beschrieben z. B. in US 4,130,632.

Nachteilig an den genannten Verfahren ist zum einen der teils hohe apparative Aufwand, um das Verkokungsproblem zu lösen oder aber die Verwendung von speziellen Katalysatoren z. T auf Edelmetallbasis, die das Verfahren verteuern.

Es bestand die Aufgabe, ein verbessertes Verfahren bereitzustellen, das auch feststoffhaltige Rückstände der Direktsynthese von Alkylchlorsilanen aufarbeiten und die siliciumorganischen Anteile in verwertbare Silane umwandeln kann.

Gegenstand der Erfindung ist ein Verfahren zur Herstellung von Alkylchlorsilanen aus den flüssigen Bestandteilen der Rückstände der Direktsynthese von Alkylchlorsilanen, die einen Siedepunkt von über 70°C bei 1013 hPa aufweisen und die Disilane enthalten, bei dem die Rückstände mit Chlorwasserstoff und Silicium bei Temperaturen von mindestens 300 °C erhitzt werden, wobei gleichzeitig mindestens 10 Gew.-% an Triund/oder Tetrachlorsilan bezogen auf das Gewicht der gebildeten Alkylchlorsilane gebildet werden.

Das Verfahren zeichnet sich insbesondere dadurch aus, daß es einfach durchzuführen ist und sehr lange Reaktionslaufzeiten ermöglicht.

Aus Chlorwasserstoff und Si-Metall wird in einer exothermen Reaktion ein Gemisch aus Tri- und Tetrachlorsilan hergestellt. Die Gleichgewichtszusammensetzung des Gemisches ist abhängig von der Reaktionstemperatur. Die Reaktionsenthalpie wird benutzt, um in den Reaktor zugespeiste flüssige Bestandteile der Rückstände der Direktsynthese von Alkylchlorsilanen auf Reaktionstemperaturen zu erhitzen, bei der dann die Spaltung mit Chlorwasserstoff zu Monosilanen einsetzt. Vorzugsweise werden im Verfahren gleichzeitig mindestens 20 Gew.-%, insbesondere mindestens 30 Gew.-% an Tri- und/oder Tetrachlorsilan bezogen auf das Gewicht der gebildeten Alkylchlorsilane gebildet. Als Produkt erhält man ein Gemisch von Tri- und Tetrachlorsilan sowie wechselnde Anteile von Organochlorsilanen, abhängig von der Zusammensetzung der flüssigen Bestandteile der Rückstände.

Vorzugsweise ist das Silicium im Verfahren als Festbett oder insbesondere in einer Wirbelschicht vorhanden.

Die HCl-Menge ist in weiten Bereichen variierbar und orientiert sich bei Wirbelschichtreaktoren im wesentlichen an der Mindestmenge zur Aufrechterhaltung der Wirbelschicht als untere Grenze und dem übermäßigen Staubaustrag aus der Wirbelschicht als obere Grenze, wobei beides stark von der Korngröße und den geometrischen Verhältnissen des Reaktors abhängt. Bei Festbettreaktoren ist die HCl-Menge begrenzt durch Anlagentechnik und ökonomische Zwänge z. B. durch HCl-Verlust. An Chlorwasserstoff eingesetzt, wird mindestens die den im Rückstand enthaltenen Disilanen und der zu bildenden Tri- und/oder Tetrachlorsilane molar äquivalente Menge. Der Rückstand und der Chlorwasserstoff können sowohl vorgeheizt, als auch bei Umgebungstemperatur in den Reaktor dosiert werden, wobei die Ströme bevorzugt kontinuierlich dosiert werden. Der Rückstand kann bei Beheizung auch als Gas-Flüssig-Gemisch dosiert werden. Bevorzugt eingesetzt wird ein Wirbelschichtreaktor.

Bevorzugt werden übliche Anlagen zur Herstellung von Tri- und Tetrachlorsilan eingesetzt.

Vorzugsweise werden durch die Spaltung der Disilane aus den flüssigen Bestandteilen der Rückstände der Direktsynthese von Alkylchlorsilanen Alkylchlorsilane der vorstehenden allgemeinen Formel hergestellt, in der R einen Methyl-, Ethyl-, Butyl- oder Propylrest, insbesondere einen Methylrest bedeutet. Insbesondere werden Methyltrichlorsilan, Dimethyldichlorsilan, Trimethylchlorsilan, Methyldichlorsilan oder Dimethylchlorsilan hergestellt.

Das Zielprodukt der Direktsynthese von Methylchlorsilanen ist in aller Regel das Dimethyldichlorsilan mit einem Siedepunkt von 70 °C, das üblicherweise zu mehr als 80 % im Rohgemisch anfällt und destillativ gereinigt wird. Die Rückstände der Direktsynthese mit einem Siedepunkt über 70 °C, vorzugsweise mindestens 80 °C, insbesondere mindestens 100 °C bestehen teilweise aus Monosilanen, z. B. Ethyldichlorsilan, Ethylmethyl-dichlorsilan, Ethyltrichlorsilan oder i-Propyltrichlorsilan. Die Anteile können stark schwanken und sind üblicherweise kleiner als 10 % im Rückstand. Disilane, z. B. Hexamethyl-disilan, Pentamethylchlordisilan, 1,1-Dichlor-1,2,2,2-tetra-methyldisilan, 1,2-Dichlor-1,1,2,2-tetramethyldisilan, 1,1,2-Trichlor-1,2,2-trimethyldisilan, 1,1,1-Trichlor-2,2,2-trimethyldisilan, 1,1,1,2-Tetrachlor-2,2-dimethyldisilan, 1,1,2,2-Tetrachlor-1,2-dimethyldisilan, Pentachlormethyldisilan und Hexachlordisilan in stark schwankenden Anteilen machen den überwiegenden Teil des Rückstandes aus. Der Anteil an Disilanen beträgt meist 20 - 80 %, üblicherweise 40 -80 %. Weitere Bestandteile sind Carbosilane, Oligosilane mit ≥ drei Silciumatomen, Kohlenwasserstoffe und Chlorkohlenwasserstoffe, deren Identifizierung und Quantifizierung große Schwierigkeiten bereiten.

Bis zu 10 Gew.-% kann auch der Anteil von Feststoffen betragen. Darunter fallen in fein- oder feinstverteilter Form z. B. Silicium und Silicide, verunreinigt mit Katalysator- und Promotorresten, Metallchloridgemische mit Hauptbestandteilen wie AlCl₃, CaCl₂, CuCl, und Ruß.

Eine ausführliche Beschreibung der Rückstände ist z. B. in US 5,292,912 aufgeführt.

Vorzugsweise wird das Verfahren in Gegenwart der Feststoffe durchgeführt, da diese das Verfahren nicht beeinträchtigen.

Das Silicium kann in gemahlener oder stückiger Form eingesetzt werden. Es wird vorzugsweise im Überschuß für die Herstellung von Tri- und/oder Tetrachlorsilan eingesetzt. Vorzugsweise wird Silicium kontinuierlich nachgespeist.

Die Menge an zugespeisten flüssigen Bestandteilen der Rückstände der Direktsynthese von Alkylchlorsilanen orientiert sich sowohl an der Aufrechterhaltung der nötigen Temperatur im Reaktor als auch gegebenenfalls der Wirbelschicht.

Das bei der Reaktion erhaltene und aus dem Reaktor austretende Gemisch wird kondensiert, gegebenenfalls von Feststoffen befreit und kann ganz oder teilweise dem bei der Direktsynthese erzeugtem Silangemisch wieder zugeführt oder auch separat in Reinsubstanzen aufgetrennt werden.

Der bei den Bedingungen des Verfahrens nicht spaltbare Anteil des Rückstands, z. B. Metallsalze und andere Feststoffe, legen sich auf Silicium-Oberflächen ab und werden schließlich zusammen mit feinstteiligem Silicium mit dem Reaktionsgas ausgeschleust und in Filtern oder Zyklonen aus dem Gasstrom abgeschieden. Die nicht spaltbaren Anteile können aber auch im Reaktor verbleiben und werden dann periodisch mit dem verbliebenen Restinhalt des Reaktors ausgeschleust. Der in beiden Fällen feste Anteil kann nach geeigneter Behandlung als Zusatzstoff in der Keramikindustrie oder als Schlackebildner eingesetzt werden. Bei genügendem Gehalt von Metallen kann es auch lohnend sein diese Metalle aus dem festen Anteil zu isolieren, z. B. Kupfer, das gelaugt und wieder in den Stoffkreislauf zurückgeführt werden kann.

Vorzugsweise wird das Verfahren bei Temperaturen von mindestens 400 °C, insbesondere mindestens 450°C und höchstens 1200 °C durchgeführt. Bei Temperaturen > 600 °C im Reaktor beginnt als Konkurrenzreaktion zur Spaltung auch die Abspaltung der Alkylgruppen vom Silicium und es entstehen Chlordisilane und Chlorsilane wie Trichlorsilan oder Tetrachlorsilan. Diese Reaktion kann ausgenutzt werden, um den destillativen Aufwand zur Trennung des Produktgemisches niedrig zu halten. Bevorzugt ist es jedoch, die Alkylchlorsilane im Gemisch mit Tri- und Tetrachlorsilan zu erhalten und die Alkylchlorsilane nach der Reindestillation einzusetzen zur Herstellung von Siliconprodukten wie Polydimethylsiloxan oder Siliconharzen.

Die im Reaktor während des Verfahrens vorherrschenden Drücke sind weit variierbar, bevorzugt ist der Bereich von 1 - 5 bar (abs.).

Besonders bevorzugt ist die vollkontinuierliche Fahrweise des Reaktors, bei der sowohl die Rückstände als auch das Silicium kontinuierlich zugegeben werden. Gegebenenfalls können für einen Strom, z.B. Rückstände oder HCl, mehrere Dosierstellen über die Reaktorlänge verteilt existieren.

In den nachfolgenden Beispielen sind, falls jeweils nicht anders angegeben,
a) alle Mengenangaben auf das Gewicht bezogen;
b) alle Drücke 1013 hPa (Normaldruck);
c) alle Temperaturen 20° C .

### Beispiele

### Beispiel 1 (analog US 2,681,355, nicht erfindungsgemäß)

In einem Laborreaktor (Leerrohr) mit 700 mm Länge und 25 mm Innendurchmesser, der elektrisch beheizt werden kann, wurden 180 ml/h hoch siedender Rückstand der Silansynthese mit einem Siedepunkt > 150 °C zusammen mit 25 l/h gasförmigem Chlorwasserstoff im Gleichstrom bei Raumtemperatur und Umgebungsdruck dosiert. Die Heizung war auf eine Temperatur von 300 °C eingestellt. Der hoch siedende Rückstand bestand aus 80 % Disilanen (Mischung aus 1,1,2,2-Tetrachlordimethyldisilan, 1,1,2-Trichlortrimethyldisilan und 1,2-Dichlortetramethyldisilan, 2 % Festanteilen und 18 % Siloxane und Carbosilane. Eine exaktere Zuordnung war aufgrund der Vielzahl von Nebenprodukten schwierig. Nach 17 Betriebsstunden wurde der Versuch abgebrochen, da der Rohrreaktor in der Reaktionszone durch Feststoff und Crackprodukte zugewachsen war. Während des Versuchs resultierte ein Spaltsilan mit folgender Zusammensetzung:

| Substanz | Anteil im Spaltsilan [Gew.-%] |
|---|---|
| Dimethylchlorsilan | 1 |
| Methyldichlorsilan | 10 |
| Trimethylchlorsilan | 2 |
| Methyltrichlorsilan | 35 |
| Dimethyldichlorsilan | 32 |
| Feststoffe | 3 |
| Sonstige | 17 |

### Beispiel 2 (erfindungsgemäß)

In einem Labor-Wirbelschichtreaktor mit 500 mm Länge und 40 mm Innendurchmesser (gefüllt mit 266g Silicium, d(0.5): 70-80µm), elektrisch beheizt, wurden 70 ml/h hoch siedender Rückstand der Silansynthese mit einem Siedepunkt > 150 °C zusammen mit 25 l/h gasförmigem Chlorwasserstoff im Gleichstrom bei Raumtemperatur und Umgebungsdruck dosiert. Die Heizung war auf eine Temperatur von 600 °C eingestellt. Der hoch siedende Rückstand bestand aus 75 % Disilanen (Mischung aus Tetrachlordimethyldisilan, Trichlortrimethyldisilan, Dichlortetramethyldisilan und anderen Silanen. Eine exaktere Zuordnung war aufgrund der Vielzahl von Nebenprodukten schwierig.) Nach 20 Betriebsstunden wurde der Versuch beendet, ohne daß Verkrustungen auftraten.

Es bildete sich ca. 100g/h Silangemisch, das als Hauptbestandteile ca. 20% Trichlorsilan und ca. 40% Siliciumtetrachlorid enthielt.

Wenn man Trichlorsilan und Siliciumtetrachlorid eliminierte, erhielt man während des Versuchs ein Spaltsilan mit folgender Zusammensetzung:

| Substanz | Anteil im Spaltsilan [Gew.-%] |
|---|---|
| Dimethylchlorsilan | 0 |
| Methyldichlorsilan | 7 |
| Trimethylchlorsilan | 1 |
| Methyltrichlorsilan | 25 |
| Dimethyldichlorsilan | 12 |
| Feststoffe | 0 |
| Sonstige | 55 |

## Patentansprüche

1. Verfahren zur Herstellung von Alkylchlorsilanen aus den flüssigen Bestandteilen der Rückstände der Direktsynthese von Alkylchlorsilanen, die einen Siedepunkt von über 70°C bei 1013 hPa aufweisen und die Disilane enthalten, bei dem die Rückstände mit Chlorwasserstoff und Silicium bei Temperaturen von mindestens 300 °C erhitzt werden, wobei gleichzeitig mindestens 10 Gew.-% an Tri- und/oder Tetrachlorsilan bezogen auf das Gewicht der gebildeten Alkylchlorsilane gebildet werden.

2. Verfahren nach Anspruch 1, bei dem das Silicium in einer Wirbelschicht vorhanden ist.

3. Verfahren nach Anspruch 1 oder 2, bei dem die Temperatur mindestens 400 °C beträgt.

4. Verfahren nach Anspruch 1 bis 3, bei dem sowohl die Rückstände als auch das Silicium kontinuierlich zugegeben werden.

## Claims

1. Process for preparing alkylchlorosilanes from the liquid constituents of the residues from the direct synthesis of alkylchlorosilanes, which have a boiling point of above 70°C at 1013 hPa and comprise disilanes, in which the residues are heated with hydrogen chloride and silicon at temperatures of at least 300°C, with at least 10% by weight of trichlorosilane and/or tetrachlorosilane, based on the weight of the alkylchlorosilanes formed, being formed at the same time.

2. Process according to Claim 1, in which the silicon is present in a fluidized bed.

3. Process according to Claim 1 or 2, in which the temperature is at least 400°C.

4. Process according to any of Claims 1 to 3, in which both the residues and the silicon are added continuously.

## Revendications

1. Procédé de préparation d'alkylchlorosilanes à partir des constituants liquides des résidus de la synthèse directe d'alkylchlorosilanes, qui présentent un point d'ébullition supérieur à 70°C à 1013 hPa et qui contiennent des disilanes, dans lequel les résidus sont chauffés avec du gaz chlorhydrique et du silicium à des températures d'au moins 300°C, au moins 10 % en poids de trichlorosilane et/ou de tétrachlorosilane étant formés par rapport au poids des alkylchlorosilanes formés.

2. Procédé selon la revendication 1, dans lequel le silicium est présent dans un lit fluidisé.

3. Procédé selon la revendication 1 ou 2, dans lequel la température est d'au moins 400°C.

4. Procédé selon les revendications 1 à 3, dans lequel tant les résidus que le silicium sont ajoutés en continu.
